# EUROPÄISCHE PATENTSCHRIFT

(11) **EP 1 186 086 B1**
(45) Veröffentlichungstag und Bekanntmachung des Hinweises auf die Patenterteilung: **11.12.2002**
(21) Anmeldenummer: 00943719.5
(22) Anmeldetag: 17.05.2000
(51) Int. Cl.: H02H 7/26, H02J 1/14

(54) **STROMVERTEILUNGSSYSTEM**
CURRENT DISTRIBUTION SYSTEM
SYSTEME DE DISTRIBUTION DE COURANT

(30) Priorität: 28.05.1999 DE 29909206 U
(43) Veröffentlichungstag der Anmeldung: 13.03.2002
(73) Patentinhaber: Ellenberger & Poensgen GmbH, D-90518 Altdorf (DE)
(72) Erfinder: FISCHER, Erich, D-90518 Altdorf (DE); NAUMANN, Michael, D-90537 Feucht (DE)
(74) Vertreter: Tergau & Pohl Patentanwälte
(86) Internationale Anmeldenummer: EP0004451
(87) Internationale Veröffentlichungsnummer: WO00074196

(56) Entgegenhaltungen:
- WO-A-00/36726
- DE-A- 19 703 236
- DE-A- 19 842 429
- US-A- 5 477 091
- US-A- 5 693 986
- US-A- 5 828 140

## Beschreibung

Die Erfindung bezieht sich auf ein im DC-Niedervoltbereich, insbesondere im 24V DC-Bereich, arbeitendes Stromverteilungssystem gemäß dem Oberbegriff des Anspruchs 1. Ein deartiges Stromverteilungssystem ist z. B. aus der DE 197 03 236 A1 bekannt.

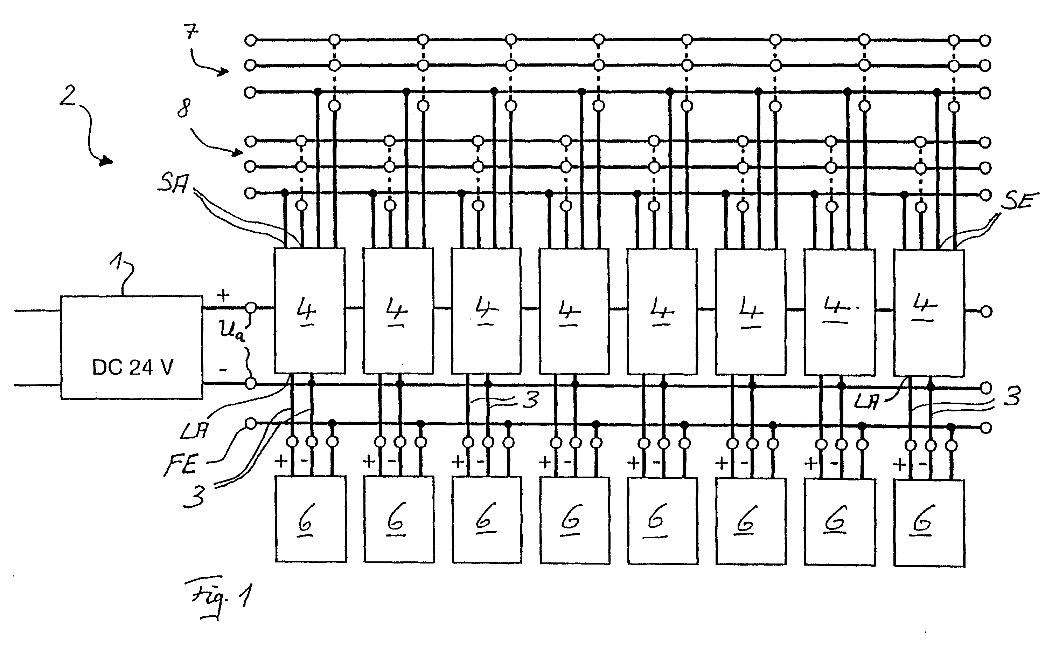

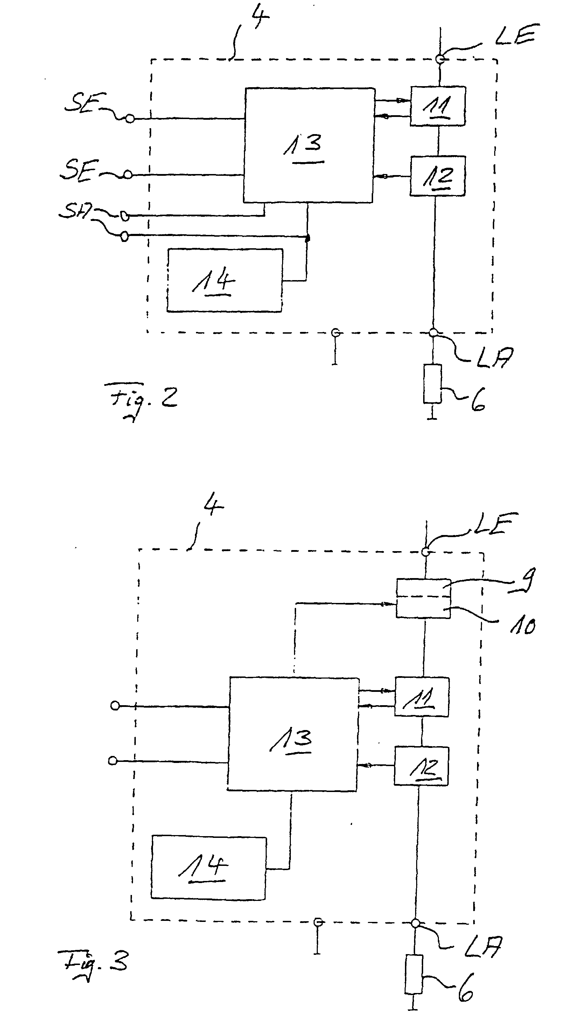

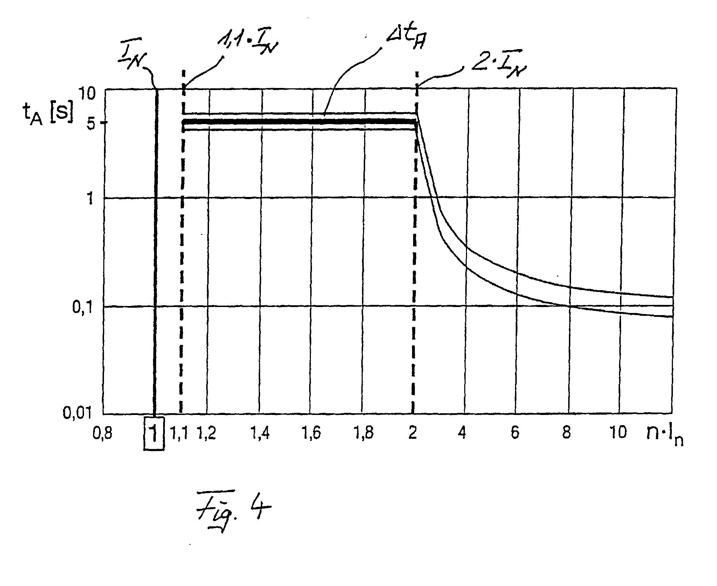

Bei einem Stromverteilungs- oder Energieversorgungssystem mit mehreren, von einem Niedervoltnetzteil gemeinsam gespeisten Stromkreisen sind an die Betriebssicherheit hohe Anforderungen gestellt. In den zueinander parallel geschalteten und vom Netzteil gemeinsam gespeisten Stromkreisen oder Strompfaden liegen im hauptsächlichen Anwendungsfall des Anlagenbaus Verbraucher, z. B. in Form von Aktoren oder Sensoren. Dabei sind in jedem Stromkreis oder Strang üblicherweise hintereinanderliegend ein mechanischer Schutzschalter, ggf. ein Schaltorgan (Relais) und der eigentliche Verbraucher bzw. der Aktor oder der Sensor angeordnet. Der mechanische Schutzschalter kann dabei nach einer thermischen oder nach einer thermischen und einer magnetischen Abschaltkennlinie arbeiten, wie dies an sich z. B. aus "Switching, Protection an Distribution in Low-Voltage Networks", Siemens, 1994, ISBN 3-89578-000-6, insbesondere Fig. 3.16, bekannt ist.

Bei einem in der Praxis zur Energie- oder Stromversorgung üblicherweise eingesetzten linear geregelten Netzteil oder Trafo-Netzteil mit einem Nennstrom von z. B. 30A und einem Kurzschlussstrom von ca. 300A ist im Falle eines Kurzschlusses innerhalb z. B. eines einzelnen Stromkreises sichergestellt, dass die Sicherung in diesem Stromkreis auch auslöst. Grund hierfür ist, dass der Kurzschlussstrom stets hoch genug ist (z. B. 100A), um den Schutzschalter schnell genug auszulösen. Auch für den durchaus üblichen Fall, dass zwanzig oder mehr Stromkreise gleichzeitig von einem einzelnen derartigen Netzteil versorgt werden, ist zudem sichergestellt, dass im genannten Kurzschlussfall die vom linearen oder linear geregelten Netzteil gelieferte Ausgangsspannung nicht oder nur unwesentlich zusammenbricht. Dies bedeutet, dass die nicht betroffenen Stromkreise ungestört und insbesondere funktionssicher weiterhin mit der erforderlichen Energie versorgt werden.

Anders verhält es sich bei getakteten Netzteilen (auch unstetig geregelte Netzteile oder Schaltnetzteile genannt; vgl. U. Freyer in "Professionelle Stromversorgung", Franzis-Verlag München (DE), 1989, ISBN 3-7723-9831-6, Seite 85), die aufgrund deren vergleichsweise geringen Abmessungen für den genannten Anwendungsfall im Anlagenbau zunehmend eingesetzt werden sollen. Diese getakteten Netzteile liefern ebenfalls die gewünschte Ausgangsspannung von z. B. 24V DC, jedoch nur einen Kurzschlussstrom von z. B. 33A. Dieser ist somit häufig nur um 10% höher als der Nennstrom des getakteten Netzteils von z. B. 30A. Im Gegensatz zum linear geregelten Netzteil ist bei einem getakteten Netzteil nicht sichergestellt, dass im Kurzschlussfall, d. h. bei einem Kurzschluss innerhalb eines einzelnen Stromkreises hinter dem Schutzschalter dieser auch zuverlässig auslöst. Grund hierfür ist, dass das getaktete Netzteil, das sich durch Begrenzung seiner Leistung selbst schützt, entsprechend die Spannung herunterregelt, oder dass bei langen Lastleitungen aufgrund des ohm'schen Anteils der Leitung der zum Auslösen notwendige Kurzschluss-Strom nicht fließen kann.

Im Extremfall, d. h. auch im Falle eines Kurzschluss in nur einem Stromkreis, kann somit die Ausgangsspannung des getakteten Netzteils und damit die Versorgungsspannung für die parallelliegenden Stromkreise zumindest annähernd bis auf Null Volt (0V) heruntergeregelt werden. Dies wiederum bedeutet, dass über den eigentlichen Schutzschalter in dem betroffenen Stromkreis praktisch kein (Kurzschluss-) Strom mehr fließt. Zumindest ist dieser aber häufig zu gering, um den mechanischen Schutzschalter auszulösen. Ein herkömmlicher Schutzschalter als Sicherung in dem betroffenen Stromkreis löst daher ggf. lediglich thermisch aus. Dies bedeutet jedoch, dass die Auslösung aufgrund der üblichen thermischen Kennlinie eines derartigen Schutzschalters erst nach z. B. 20s erfolgt. Während dieser Zeit ist die Versorgungsspannung für die übrigen Stromkreise oder Strompfade zu niedrig, um deren zuverlässigen Betrieb zu gewährleisten (Power-Reset). Somit ist der gesamte Anlagenteil, der von diesem getakteten Netzteil versorgt wird, gestört und daher nicht mehr funktionsfähig. Mit anderen Worten: Im Kurzschlussfall auch nur eines einzelnen Stromkreises oder Strompfades ist damit eine Rückwirkung auf die übrigen, intakten Stromkreise gegeben, in dessen Folge diese ebenfalls gestört sind. Die Betriebssicherheit ist daher nicht zuverlässig gewährleistet, da nicht sichergestellt ist, dass im Kurzschluss- oder auch im Überlastfall die übrigen, parallel zu dem betroffenen Stromkreis liegenden und ebenfalls von diesem getakteten Netzteil versorgten Stromkreise die erforderliche Energie erhalten, wenn das getaktete Netzteil seine Leistung und damit die Versorgungsspannung herunterregelt.

Da zudem der mechanische Schutzschalter im betroffenen Stromkreis nicht oder nur extrem verzögert auslöst, ist praktisch nicht feststellbar, welcher Stromkreis betroffen ist, zumal aufgrund der Rückwirkung auch die übrigen Stromkreise gestört sind. Sind in den einzelnen Stromkreisen oder -pfaden sogenannte "Power-Fail-Resets" eingebaut, so schalten in einem solchen "Worst Case" alle Stromkreise ab. Ist kein derartiger Reset eingebaut, so ist die Leistung in den weiteren, an sich intakten Strängen jedenfalls derart gering, dass die Verbraucher, insbesondere Aktoren oder Sensoren, nicht mehr fehlerfrei arbeiten können.

Die aus der DE 197 03 236 A1 bekannte Schalteranordnung für elektrische Bordnetz-Steuergeräte von Kraftfahrzeugen weist eine Anzahl von bestimmten Lasten zugeordneten elektronische Schalter auf, die bei Überschreiten deren eingestellter Kurzschlussschwelle eine Statussignal an eine zentrale Steuereinheit abgeben und von dieser ein Schaltsteuersignal zur zeitlichen Begrenzung des Stroms und damit zur Abschaltung erhalten. Zur Stabilisierung der Bordnetzspannung bei Aktivierung einer kritischer Last wird eine weniger kritische Last abgeschaltet.

Aus "Circuit Breaker Application Guide - Electronic Trip Circuit Breakere Basics", Square D Group Schneider, Juni 1996, Bestellnummer 602SC9601, sind elektromechanische Schutzschalter mit elektronischer Stromerfasssung und Ansteuerung eines mechanischen Schaltelementes bekannt Die elektronische Stromerfasssung und Ansteuerung erfolgt mittels eines elektronischen Steuergerätes, das zur Anwendung in AC-Netzen einstellbare Frequenzregler aufweist und die Einstellung von Stromschwellen und Abschaltzeiten ermöglicht. Dadurch soll eine selektive Abschaltung von Einzelsicherungen zeitlich vor einer Abschaltung einer übergeordneten Hauptsicherung sichergestellt werden.

Aufgabe der Erfindung ist es, ein Stromverteilungssystem mit einer Mehrzahl von mittels eines getakteten Netzteil gemeinsam versorgten Stromkreisen anzugeben, bei dem eine hohe Betriebssicherheit des Gesamtsystems gewährleistet ist. Insbesondere soll eine geeignete Schutzeinrichtung für ein derartiges Stromverteilungssystem angegeben werden.

Diese Aufgabe wird erfindungsgemäß gelöst durch die Merkmale der unabhängigen Ansprüche 1 und 5. Vorteilhafte Ausgestaltungen und Weiterbildungen sind Gegenstand der Unteransprüche.

Erfindungsgemäß ist in jedem der von dem getakteten Netzteil versorgten Stromkreise des Stromverteilungssystems ein elektronischer Schutzschalter eingesetzt. Dieser dient im Wesentlichen zur Strombegrenzung innerhalb des durch Kurzschluss und/oder Überlast betroffenen Stromkreises. Dabei ist die Strombegrenzung vorteilhafterweise einstellbar, d. h. aktiv regel- oder steuerbar.

Dazu umfaßt der elektronische Schutzschalter zweckmäßigerweise ein Leistungsteil, vorzugsweise in Form eines Halbleiters, beispielsweise eines Power-MOS-Transistors, der im Normalzustand, d. h. bei Soll-Laststrom im jeweiligen Stromkreis, vollständig aufgesteuert ist. Des Weiteren umfasst der elektronische Schutzschalter ein Messwerterfassungsteil, z. B. ein Shunt, mit dem insbesondere der über den jeweiligen Stromkreis fließende Laststrom erfasst wird. Ferner ist ein Steuerteil vorgesehen, dass anhand des erfassten Laststroms und vorzugsweise anhand der an dem Lastteil liegenden, d. h. über dem Halbleiter abfallenden Spannung ein entsprechendes Steuersignal für das Leistungsteil liefert.

Im Überlastfall, d. h. beispielsweise im Bereich von 105% bis 200% des Nennstroms des Lastteils und damit bei Überschreiten einer ersten einstellbaren Stromschwelle, läuft ein Zeitglied ab. Dieser Zeitablauf kann beispielsweise 1s bis 20s, insbesondere 5s, betragen, was der thermischen Kennlinie eines herkömmlichen Schutzschalters entspricht. Nach Ablauf des Zeitglieds wird der Leistungsschalter, d. h. das Leistungsteil abgeschaltet. Beim Halbleiter bedeutet dieses, dass er gesperrt wird und erst durch einen Reset wieder durchgesteuert werden kann. Zusätzlich erfolgt vorzugsweise auch eine elektromechanische Trennung des betroffenen Stromkreises vom Netzteil. Dies kann durch ein steuerbares Auslöserelais mit zusätzlicher Anzeige erfolgen, das dann vom Steuerteil entsprechend angesteuert wird und den betroffenen Stromkreis elektromechanisch vom Netzteil trennt.

Im Kurzschlussfall würde theoretisch der Kurzschlussstrom eine vorgebbare zweite Stromschwelle, die beispielsweise 200% des Nennstroms des Leistungsteils beträgt, übersteigen. Der über den betroffenen Stromkreis fließende Strom wird jedoch auf vorzugsweise 200% des Nennstroms, d. h. auf das 2-fache des Nennstroms des Leistungsteils (strom-) begrenzt. Die Strombegrenzung kann beispielsweise auch bei mehr oder weniger als 200% des Nennstroms erfolgen.

Im Kurzschlussfall wird somit die magnetische Kennlinie eines üblichen Schutzschalters nachgebildet. Zusätzlich kann die Spannung über dem Leistungsteil und damit die über dem durchgesteuerten Halbleiter abfallende Spannung erfasst werden. Der Spannungswert über dem Leistungsteil gibt an, wie schnell abgeschaltet wird, d. h. nach welchem Zeitablauf der Halbleiter gesperrt wird. Liegt beispielsweise nur ein geringer Teil der Versorgungsspannung des getakteten Netzteils über dem Halbleiter, so wird die Abschaltung beispielsweise erst nach z. B. 500ms erfolgen. Liegt dagegen die gesamte Netzspannung über dem Halbleiter, so wird die Abschaltung nach z. B. spätestens 5ms erfolgen.

Die mit der Erfindung erzielten Vorteile bestehen insbesondere darin, dass bei Einsatz eines getakteten Netzteils zur gleichzeitigen Versorgung einer Vielzahl von parallel an das getaktete Netzteil ausgangsseitig angeschlossenen Stromkreisen durch Verwendung elektronischer Schutzschalter in jedem Stromkreis eine hohe Betriebssicherheit des entsprechenden Stromverteilungssystems gewährleistet ist. Dabei ist sichergestellt, dass im Überlast- und/oder Kurzschlussfall eines der gespeisten Stromkreise einerseits ein ausreichender Leitungsschutz in diesem Stromkreis gewährleistet ist, und dass andererseits die übrigen Stromkreise mit möglichst unverminderter Leistung versorgt werden. Im Kurzschluss- und/oder Überlastfail sinkt die Ausgangsspannung des getakteten Netzteils und damit die Versorgungsspannung für die intakten Stromkreise nicht oder nur unwesentlich unter die Nenn- oder Sollspannung ab. Insbesondere im Kurzschlussfall eines Stromkreises erfolgt zuverlässig zunächst eine Strombegrenzung über diesen betroffenen Stromkreis, so dass die Ausgangsspannung des getakteten Netzteils zumindest nahezu vollständig erhalten bleibt.

Durch den Einsatz derartiger elektronischer Schutzschalter in jedem der parallelliegenden und gemeinsam von dem getakteten Netzteil versorgten Stromkreise ist somit praktisch ein rückwirkungsfreier Kurzschluss- und/oder Überlastschutz des gesamten Stromverteilungssystems gewährleistet. Grund hierfür ist, dass auch bei Ausfall eines Stromkreises der elektronische Schutzschalter aufgrund der aktiv gesteuerten oder geregelten Strombegrenzung in diesem Stromkreis sicherstellt, dass die anderen Stromkreise insoweit nicht betroffen sind, als die Ausgangsspannung des getakteten Netzteils praktisch unverändert aufrechterhalten bleibt. Die Schutzschalteinrichtung mit einer der Anzahl der von einem getakteten Netzteil gemeinsam versorgten Stromkreise entsprechenden Anzahl von elektronischen Schutzschaltern eignet sich somit besonders zur Energie- oder Stromverteilung im 24V DC-Bereich, dessen klassische Anwendung der Anlagenbau ist, insbesondere in der Automobilindustrie.

Nachfolgend werden Ausführungsbeispiele der Erfindung anhand einer Zeichnung näher erläutert. Darin zeigen:
- Fig. 1: schematisch ein Stromverteilungssystem mit einer Anzahl von mittels eines getakteten Netzteils gemeinsam versorgten Stromkreisen mit elektronischen Schutzschaltern als Schutzeinrichtung,
- Fig. 2: in einem Blockschaltbild die Funktionsbausteine eines elektronischen Schutzschalters gemäß Fig. 1,
- Fig. 3: in einem Blockschaltbild gemäß Fig. 2 den elektronischen Schutzschalter mit einem Fail-Safe-Element und mit einer elektromechanischen Trennvorrichtung, und
- Fig. 4: in einem Strom-/Zeit-Diagramm die Kennlinie des elektronischen Schutzschalters.

Gemäß Fig. 1 ist ein getaktetes Netzteil 1 eines Energieversorgungs- oder Stromverteilungssystems 2 ausgangsseitig mit einer Vielzahl von parallelliegenden Stromkreisen oder -pfaden 3 verbunden, deren jeder einen elektronischen Schutzschalter 4 aufweist. Diesem wiederum ist - bedarfsweise über ein (nicht dargestelltes) Relais oder ein ähnliches Schaitorgan - ein Verbraucher, ein Aktor, ein Sensor oder allgemein eine Last 6 nachgeschaltet. Jeder elektronische Schutzschalter 4 ist über dessen LINE-Eingang LE mit dem Pluspol (+) des getakteten Netzteils 1 verbunden. Der jeweilige LOAD-Ausgang LA des elektronischen Schutzschalters 4 ist über das Schaltorgan oder - falls dieses nicht erforderlich oder vorgesehen ist - direkt mit der jeweiligen Last 6 verbunden. Die Lasten 6 liegen an einer gemeinsamen Funktionserde FE. Die Stromkreise 3 sind über den Minuspol (-) des getakteten Netzteils 1 gemeinsam geschlossen, wobei an diesen Minuspol (Ground) eine Versorgungsleitung zur Eigenversorgung des jeweiligen elektronischen Schutzschalters 4 angeschlossen ist. Die Ausgangsspannung Uₐ des getakteten Netzteils 1 beträgt beispielsweise 24 V DC, während der Nenn- oder Powerstrom beispielsweise 30A und der Kurzschlussstrom beispielsweise 33A betragen.

Die gleichartig aufgebauten elektronischen Schutzschalter 4 weisen Steuereingänge SE und Signalausgänge SA auf, die im Ausführungsbeispiel an eine gemeinsame Steuerleitung oder Busschnittstelle 7 bzw. an eine gemeinsame Signalleitung oder Busschnittstelle 8 geführt sind. Die elektronischen Schutzschalter 4 und die diesen zugeordneten Strompfade 3 können auch gruppenweise zusammengefasst sein, wobei dann mehrere Schutzschalter 4, z. B. vier Schutzschalter 4 oder Schutzschalterfunktionen, inklusive der zugehörigen Strompfade 3 in ein Bauteil integriert sind. Auch können die elektronischen Schutzschalter 4 inklusive der diesen zugeordneten Strompfade 3 zusammen mit dem getakteten Netzteil 1 in einem gemeinsamen Gehäuse angeordnet sein.

Der jeweilige elektronische Schutzschalter 4 ist in den Figuren 2 und 3 funktional dargestellt, wobei Fig. 3 einen um ein Faile-Safe-Element 9 und um eine elektromagnetische Trenneinrichtung 10, beispielsweise in Form eines Auslöserelais, erweiterten elektronischen Schutzschalter 4 zeigt. Der elektronische Schutzschalter 4 umfasst ein an den LINE-Eingang LE angeschlossenes Leistungsteil 11, dass über ein Messwerterfassungsteil 12 an den LOAD-Ausgang LA geführt ist. An diesen ist gegen den Minuspol und somit gegen Ground der jeweilige Aktor bzw. Sensor oder ggf. über ein entsprechendes Schaltorgan der Verbraucher und damit die jeweilige Last 6 angeschlossen. Das Messwerterfassungsteil oder ein entsprechender Erfassungsbaustein 12, z. B. ein Shunt, ist mit einem Steuerteil 13 verbunden. Diesem wird auch der Wert der über dem Leistungsteil 11 liegenden Spannung, d. h. im Falle eines durchgesteuerten Halbleiters als Leistungsteil 11 die über diesem abfallende Spannung zugeführt.

Der Halbleiter als Leistungsteil 11 ist beispielsweise ein Power-MOS-Transistor. Das Steuerteil 13 ist zu dessen Energieversorgung einerseits mit dem LINE-Eingang LE und andererseits mit Ground, d. h. mit dem Minuspol (-) des getakteten Netzteils 1 verbunden. Steuerseitig ist das Steuerteil 13 mit dem Leistungsteil 11 verbunden. Das Steuerteil 13 stellt im Normalzustand, d. h. im fehlerfreien Zustand dieses Stromkreises 3 das Leistungsteil 11 derart ein, dass der vom getakteten Netzteil 1 gelieferte Laststrom praktisch vollständig über das Leistungsteil 11 und somit zum entsprechenden Verbraucher, Aktor oder Sensor bzw. zur Last 6 fließt. Im Falle eines durchgesteuerten Halbleiters bedeutet dies, dass dieser voll aufgesteuert ist.

Wie aus der Strom-/Zeitkennlinie gemäß Fig. 4 des elektronischen Schutzschalters 4 ersichtlich ist, erfolgt im Kurzschlussfall eine Strombegrenzung durch entsprechendes Zusteuern des Leistungsteils 11. Dabei sind auf der Abszisse das jeweilige Vielfache n des Nennstroms I_{N} und auf der Ordinate die Abschaltzeit t_{A} in Sekunden (s) aufgetragen. Als (zweite) Stromschwelle wird vorzugsweise der zweifache Nennstrom I_{N} (2 · I_{N}) des Leistungsteils 11 herangezogen.

Der typische Abschaltpunkt liegt bei 110% des Nennstroms I_{N} (1,1 · I_{N}). Zwischen dem 1,1-fachen und dem 2-fachen des Nennstroms I_{N} liegt die Abschaltzeit t_{A} vorzugsweise im Bereich von t_{A} = 5s, wobei ein zulässiges Toleranzband Δt_{A} um diesen als fett gedruckte Linie dargestellten Wert angedeutet ist. Der dem Steuerteil 13 zugeführte Spannungswert des Leistungsteits 11 kann als zusätzliche Steuergröße für diejenige Zeitspanne dienen, in der das Leistungsteil 11 gesperrt und somit der Stromkreis 3 praktisch abgeschaltet wird. Zusätzlich kann eine elektromechanische Trennung mittels des Auslöserelais 10 erfolgen. das dazu entsprechend vom Steuerteil 13 angesteuert wird. Dadurch ist der betroffene Stromkreis 3 vollständig vom Netzteil 1 getrennt.

Im Kurzschlussfall bildet der elektronische Schutzschalter 4 somit die magnetische Abschaltkennlinie eines herkömmlichen mechanischen Schutzschalters nach. Oberhalb des 2-fachen Nennstroms I_{N} ist jedoch eine aktive Strombegrenzung bei 2 · I_{N} wirksam, so dass die nicht betroffenen oder intakten Stromkreise 3 rückwirkungsfrei mit praktisch unveränderter Ausgangsspannung des Netzteils 1 versorgt werden. Der abklingende Verlauf der Stromkennlinie in Fig. 4 oberhalb des 2-fachen Nennstroms I_{N} deutet dabei den theoretischen Überlaststrom an. In diesem Bereich kann der Kurzschlussstrom direkt und/oder durch eine Messung des Spannungsabfalls über einem Leistungstransistor des Leistungsteils 11 erfasst werden. Je größer der theoretische Kurzschlussstrom ist, desto schneller erfolgt eine Abschaltung. Eine Kurzschlussabschaltung erfolgt zweckmäßigerweise nach Ablauf einer Abschaltzeit von t_{A} = 100ms.

Im Überlastfall kann ein Strombereich von z. B. wiederum 110% bis 200% des Nennstroms I_{N} des Leistungsteils 11 vorgegeben werden, wobei die 110% oder das 1,1-fache des Nennstroms I_{N} als untere (erste) Stromschwelle praktisch beliebig einstellbar oder vorgebbar ist. Liegt der Laststrom I_{N} innerhalb des Strombereiches zwischen 1,1 · I_{N} und 2 · I_{N}, so wird ein Zeitglied gestartet, wobei erst nach dessen Zeitablauf, z. B. nach 5s, eine Sperrung des Leistungsteils 11 und somit eine Abschaltung des betroffenen Stromkreises 3 erfolgt. Im Überlastfall bildet der elektronische Schutzschalter 4 somit die thermische Abschaltkennlinie eines herkömmlichen mechanischen Schutzschalters nach.

Das Steuerteil 13 weist zudem zusätzlichen den Steuereingang SE auf, über den eine externe Ansteuerung des Leistungsteils 11 über die Busschnittstelle 7 erfolgen kann. Außerdem sind Steuer- oder Signalausgänge SA des Steuerteils 13 vorgesehen, die einerseits an die Busschnittstelle 8 geführt werden können, um in einem übergeordneten Leitsystem die Betriebs- und/oder Fehlfunktion des betroffenen Stromkreises 3 darzustellen und zu melden. Auch kann ein derartiger Signalausgang SA an eine optische Anzeige 14 in Form beispielsweise einer Leuchtdiode (LED) geführt sein, mit der die Betriebs- oder Fehlerfunktion - auch selektiv nach einem Kurzschluss- oder Überlastfall - am jeweiligen Schutzschalter 4 selbst anzeigbar ist.

Ein weiteres Element des elektronischen Schutzschalters 4 gemäß Fig. 3 ist das sogenannte Fail-Safe-Element 9. Wichtig in diesem Zusammenhang ist, dass es sich bei der erfindungsgemäßen Schutzeinrichtung nicht nur um einen Geräteschutz, sondern insbesondere auch um einen Leitungsschutz handelt. Das Fail-Safe-Element 9 dient einerseits zur Sicherung der Schaltung des elektronischen Schutzschalters 4 gegen Verpolung (Verpolschutz). Andererseits dient dieses Element 9 zur Übernahme der Schutzfunktion, wenn beispielsweise das Leistungsteil 11 ausfällt (Redundanz). Als Fail-Safe-Element 9 wird vorzugsweise eine Dehndrahtsicherung eingesetzt. Wichtig ist, dass diese Fail-Safe-Sicherung nur dann anspricht, wenn die Hauptsicherung, d. h. der elektronische Schutzschalter 4 defekt ist. Ist beispielsweise der elektronische Schutzschalter 4 auf 6A - entsprechend dem zweifachen Nennstrom I_{N} = 3A - ausgelegt, so ist die Fail-Safe-Sicherung 9 höher, beispielsweise auf 8A, ausgelegt. Zweckmäßigerweise bewirkt das Faile-Safe-Element 9 nur dann eine Abschaltung, wenn das-Leistungsteil 11 und/oder das Steuerteil 13 ausfällt.

Wesentliche Funktionsmerkmale des elektronischen Schutzschalters 4 sind somit einerseits die aktiv einstellbare Strombegrenzung und die einstellbaren Stromschwellen für Überlast oder Kurzschluss in Abhängigkeit vom vorgebbaren Nennstrom I_{N} des Leistungsteils 11 sowie die Schaltfunktion. Andererseits weist der elektronische Schutzschalter 4 als Funktionsmerkmal die überlastabhängige Abschaltkennlinie gemäß Fig. 4. als Nachbildung beispielsweise thermischer oder thermisch/magnetischer oder magnetisch/hydraulischer Schutzschalter-Kennlinien auf.

### Bezugszeichenliste

- 1: getaktetes Netzteil
- 2: Stromverteilungs-/Energieversorgungssystem
- 3: Stromkreis/Pfad
- 4: Elektronischer Schutzschalter
- 6: Last
- 7: Steuerleitung/Bussystem
- 8: Signalleitung/Bussystem
- 9: Fail-Save-Element
- 10: Trenneinrichtung
- 11: Leistungsteil
- 12: Messwerterfassungsteil
- 13: Steuerteil
- 14: Anzeige

- FE: Funktionserde
- LA: LOAD-Ausgang
- LE: LINE-Eingang
- SA: Signalausgang
- SE: Steuereingang
- I_{N}: Nennstrom
- Uₐ: Ausgangsspannung
- t_{A}: Abschaltzeit
- Δt_{A}: Toleranzband

## Patentansprüche

1. Stromverteilungssystem im DC-Niedervoltbereich, insbesondere im 24V DC-Bereich, mit einer Anzahl von Stromkreisen (3) mit jeweils einem ein Leistungsteil (11) aufweisenden elektronischen Schutzschalter (4) als Kurzschluss- und/oder Überlastschutz, wobei die Stromkreise (3) von einer Stromversorgung (1) gemeinsam gespeist sind,
**dadurch gekennzeichnet,**
- **dass** die Stromversorgung mittels eines getakteten Netzteils (1) erfolgt, und
- **dass** der oder jeder elektronische Schutzschalter (4) eine einstellbare Strombegrenzung umfasst, wobei
im Überlastfall bei Überschreiten einer ersten einstellbaren Stromschwelle eine Sperrung des Leistungsteils (11) nach Ablauf einer ersten einstellbaren Abschaltzeit erfolgt, und
im Kurzschlußfall eine Begrenzung des Stromes durch das Leistungsteil (11) auf eine zweite einstellbare Stromschwelle und eine Sperrung des Leistungsteils (11) nach Ablauf einer zweiten Abschaltzeit erfolgt.

2. Stromverteilungssystem nach Anspruch 1,
**dadurch gekennzeichnet,**
**dass** der elektronische Schutzschalter (4) zusätzlich zum Leistungsteil (11) ein Messwerterfassungsteil (12) zur Messung des in dem entsprechenden Stromkreis (3) fließenden Laststroms sowie ein Steuerteil (13) zur Einstellung der Strombegrenzung des Leistungsteils (11) und zu dessen zeitabhängigen Sperrung aufweist.

3. Stromverteilungssystem nach Anspruch 1 oder 2,
**dadurch gekennzeichnet,**
**dass** im Kurzschluss- und/oder Überlastfall zusätzlich eine elektromagnetische Trennung des betroffenen Stromkreises (3) vom Netzteil (1) erfolgt.

4. Stromverteilungssystem nach einem der Ansprüche 1 bis 3,
**gekennzeichnet durch**
ein Fail-Safe-Element (9) in dem oder jedem Stromkreis (3) als redundanter Leitungsschutz und/oder als Verpolschutz.

5. Verwendung eines elektronischen Schutzschalters (4) mit einstellbarer Strombegrenzung als Kurzschluss- und/oder Überlastschutz in einem Stromverteilungssystem (2) nach einem der Ansprüche 1 bis 4.

## Claims

1. Power distribution system in the low-voltage DC range, in particular in the 24V DC range, having a number of circuits (3) each having an electronic circuit breaker (4), which has a power stage (11), as a short-circuit and/or overload protection, the circuits (3) being fed jointly by a power supply (1),
**characterized in that**
- power is supplied by means of a clocked power supply unit (1), and
- the or each electronic circuit breaker (4) comprises an adjustable current limiting means, in the event of an overload, when a first adjustable current threshold is exceeded, the power stage (11) being turned off after a first adjustable disconnection time has expired and, in the event of a short circuit, the current being limited to a second adjustable current threshold by the power stage (11) and the power stage (11) being turned off after a second disconnection time has expired.

2. Power distribution system according to Claim 1, **characterized in that** the electronic circuit breaker (4), in addition to the power stage (11), has a measured-value registration part (12) for measuring the load current flowing in the corresponding circuit (3), and also a control stage (13) for adjusting the current limiting of the power stage (11) and for turning it off as a function of time.

3. Power distribution system according to Claim 1 or 2, **characterized in that** in the event of a short circuit and/or overload, electromagnetic isolation of the relevant circuit (3) from the power supply unit (1) is additionally carried out.

4. Power distribution system according to one of Claims 1 to 3, **characterized by** a fail-safe element (9) in the or each circuit (3) as redundant line protection and/or as reverse polarity protection.

5. Use of an electronic circuit breaker (4) with an adjustable current limiting means as a short-circuit and/or overload protection in a power distribution system (2) according to one of Claims 1 to 4.

## Revendications

1. Système de distribution de courant dans le domaine à basse tension continue, en particulier dans le domaine 24V continu, équipé d'une pluralité de circuits (3) avec chacun un interrupteur de protection électronique (4) présentant un élément de puissance (11) en tant que protection contre les courts-circuits et/ou contre les surcharges, les circuits (3) étant alimentés en commun par une alimentation en courant (1),
**caractérisé en ce que**
- l'alimentation en courant s'effectue à l'aide d'un bloc d'alimentation pulsé (1) et
- le ou chacun des interrupteurs de protection électroniques (4) comporte une limitation en courant réglable,
en cas de surcharge lors d'un dépassement d'un premier seuil de courant réglable, un blocage de l'élément de puissance (11) s'effectue après expiration d'un premier temps de coupure réglable, et
en cas de court-circuit, une limitation du courant s'effectue par l'élément de puissance (11) sur un second seuil de courant réglable et un blocage de l'élément de puissance (11) s'effectue après expiration d'un second temps de coupure.

2. Système de distribution de courant selon la revendication 1, **caractérisé en ce que** l'interrupteur de protection électronique (4) présente en plus de l'élément de puissance (11) un élément de détection de valeur de mesure (12) en vue de la mesure du courant de charge circulant dans le circuit correspondant (3), ainsi qu'un élément de commande (13) en vue du réglage de la limitation en courant de l'élément de puissance (11) et du blocage de celui-ci en fonction du temps.

3. Système de distribution de courant selon la revendication 1 ou 2, **caractérisé en ce qu'**en cas de court-circuit et/ou de surcharge est effectuée en outre une séparation du circuit concerné (3) du bloc d'alimentation (1).

4. Système de distribution de courant selon une des revendications 1 à 3, **caractérisé par** un élément à sécurité intégrée (9) dans le ou chaque circuit (3) en tant que protection de ligne redondante et/ou en tant que protection contre une inversion des pôles.

5. Utilisation d'un interrupteur de protection électronique (4) muni d'une limitation de courant réglable en tant que protection contre les courts-circuits et/ou les surcharges dans un système de distribution de courant (2) selon l'une des revendications 1 à 4.
